# EUROPEAN PATENT APPLICATION

(11) **EP 4 312 289 A1**
(43) Date of publication of application: **31.01.2024**
(21) Application number: 23184748.4
(22) Date of filing: 11.07.2023
(51) Int. Cl.: H01M 4/36, H01M 4/38, H01M 4/505, H01M 4/525, H01M 4/58, H01M 4/587, H01M 10/0525, H01M 10/0565, H01M 10/0568, H01M 10/0569

(54) **METHOD FOR IN-SITU THERMAL POLYMERIZATION OF A GEL POLYMER ELECTROLYTE IN A LITHIUM-ION ELECTROCHEMICAL CELL**

(30) Priority: 29.07.2022 US 202217876934
(71) Applicant: Saft America, Cockeysville, MD 21030-2152 (US)
(72) Inventor: NYKAZA, Jacob, NEW FREEDOM, 17349 (US); RUFF, Tyler, HANOVER, 17331 (US)
(74) Representative: Hirsch & Associés

(57) **Abstract**

A lithium-ion electrochemical cell comprising:
- a negative electrode comprising an active material selected from the group consisting of carbon, silicon and a carbon-silicon composite;
- a positive electrode;
- a gel-type electrolyte comprising a matrix which is a polymer resulting from the cross-linking of a monomer comprising at least two acrylate groups, in which matrix there is embedded a liquid mixture comprising at least one solvent, lithium hexafluorophosphate (LiPF₆), at least one of lithium bis(fluorosulfonyl)imide (LiFSI) and lithium bis(trifluoromethanesulfonyl)imide (LiTFSI), lithium difluoro(oxalato)borate (LiDFOB) and a thermal initiator of radical polymerization.

## Description

### FIELD OF THE INVENTION

The technical field of the invention is that of lithium-ion electrochemical cells comprising a gel polymer electrolyte. It also relates to the field of processes for preparing such cells.

### BACKGROUND ART

Rechargeable electrochemical cells of the lithium-ion type are known in the art. Because of their high gravimetric and volumetric capacities, they are a promising source of electrical energy. They comprise at least one positive electrode (cathode), the active material of which is generally a lithium oxide of at least one transition metal or a lithium phosphate of at least one transition metal, and at least one negative electrode (anode), the active material of which may be graphite-based.

The electrolyte of such cells can be liquid, gelled or solid. The gelled form provides certain advantages over the liquid form. In the event of an accidental opening of the cell container, it prevents the electrolyte from spilling into the environment in which the cell is placed.

A gel electrolyte can be obtained by dispersing a polymer in an organic solvent in which one or more lithium salts have been added beforehand. Examples of polymers include polyvinylidene fluoride (pVdF), polyvinylidene fluoride-co-hexafluoropropylene p(VdF-HFP), polyethylene oxide and polyacrylates. The solvent can be a cyclic carbonate or a linear carbonate. Alternatively, a liquid mixture comprising an organic solvent and a cross-linkable compound can be used. For example, a solution comprising an organic solvent, a monomer comprising at least two acrylate groups and a radical polymerization initiator can be used. Under the effect of heat or UV radiation, depending on the type of initiator used, polymerization of the monomer occurs, leading to a polymer having a three-dimensional structure. The phenomenon of forming a three-dimensional structure is also referred to as cross-linking. The cross-linking rate can be varied by varying the duration of exposure of the liquid mixture to heat or UV radiation. A cross-linked polymer is thus obtained and used as the electrolyte of a lithium-ion electrochemical cell.

A poly(acrylate) gel electrolyte can be obtained through cross-linking of a monomer having at least two acrylate groups. However, the preparation of such a gel polymer electrolyte entails certain drawbacks. The paper « Effect of unreacted monomer on performance of lithium-ion polymer batteries based on polymer electrolytes prepared by free radical polymerization", Journal of Power Sources 139 (2005) 284-388 reports that the presence of residual acrylate monomers has a detrimental effect on the operation of the electrochemical cell when the cell comprises a graphite-based negative electrode. Indeed, these monomers react at the negative electrode during the first charge of the electrochemical cell also referred to as "electrochemical formation" and decompose to form on the surface of the negative electrode a highly resistive passivation layer also referred to as "solid electrolyte interface SEI". This results in a decrease in the discharge capacity of the cell when it is discharged at a high discharge current or under a low temperature. The paper teaches that increasing the concentration of the polymerization initiator allows reducing the amount of unreacted monomers thereby reducing the resistance of the solid electrolyte interface.

An alternative means for reducing the adverse effect of the presence of residual acrylate monomers is sought.

### SUMMARY OF THE INVENTION

To this end, the invention provides a lithium-ion electrochemical cell comprising:
a negative electrode comprising an active material selected from the group consisting of carbon, silicon and a carbon-silicon composite;
a positive electrode;
a gel-type electrolyte comprising a matrix which is a polymer resulting from the cross-linking of a monomer comprising at least two acrylate groups, in which matrix there is embedded a liquid mixture comprising at least one solvent, lithium hexafluorophosphate (LiPF₆), at least one of lithium bis(fluorosulfonyl)imide (LiFSI) and lithium bis(trifluoromethanesulfonyl)imide (LiTFSI), lithium difluoro(oxalato)borate (LiDFOB) and a thermal initiator of radical polymerization.

The invention is based on the discovery that the use of a mixture of lithium salts consisting of lithium hexafluorophosphate, lithium difluoror(oxalato)borate and at least one of lithium bis(fluorosulfonyl)imide (LiFSI) and lithium bis(trifluoromethanesulfonyl)imide (LiTFSI) makes it possible to reduce the adverse effect caused by the presence of the residual monomers, that is, monomers which have not been incorporated in the cross-linked polymer structure.

This salt mixture enables the in-situ polymerization of the acrylate-based monomers to form a gel polymer electrolyte cell with excellent electrochemical properties such as high material utilization, good cyclability, and low cell resistance.

In one embodiment, the monomer is selected from the group consisting of poly(ethylene glycol)diacrylate (PEGDA), poly(ethylene glycol) dimethacrylate (PEGDMA), poly(propylene glycol) diacrylate (PPGDA), polypropylene glycol) dimethacrylate (PPPGDMA), trimethylolpropane propoxylate triacrylate (TPPTA) and mixtures thereof.

In one embodiment, the monomer is selected from the group consisting of poly(ethylene glycol)diacrylate (PEGDA), trimethylolpropane propoxylate triacrylate (TPPTA) and mixtures thereof.

In one embodiment, the mass percentage of LiDFOB ranges from 0.1 to 5 % when a total mass of the at least one solvent, lithium hexafluorophosphate (LiPF₆), the at least one of lithium bis(fluorosulfonyl)imide (LiFSI) and lithium bis(trifluoromethanesulfonyl)imide (LiTFSI), lithium difluoro(oxalato)borate (LiDFOB) is considered 100 wt.%.

In one embodiment, the thermal initiator of radical polymerization is one or more of an azo-type and a peroxide-type radical initiator.

In one embodiment, the at least one solvent is selected from the group consisting of cyclic carbonates, linear carbonates, linear esters, linear ethers, the fluorinated derivatives of each of the carbonates, esters or ethers and a mixture thereof.

In one embodiment, the positive electrode comprises an active material which is at least one of a lithium iron phosphate, a lithium manganese iron phosphate and a lithium oxide of at least one transition metal.

In one embodiment, the at least one lithium oxide of at least one transition metal is selected from the group consisting of a lithium cobalt oxide, a lithium manganese oxide, a lithium nickel oxide, a lithium nickel cobalt manganese oxide (NMC), a lithium nickel cobalt aluminum oxide (NCA) and a mixture thereof.

The invention further provides a process for in-situ thermal polymerization of a gel-type polymer electrolyte in a lithium-ion electrochemical cell, said process comprising the steps of:
a) preparing an electrode plate group, said electrode plate group comprising at least one positive electrode, at least one separator and at least one negative electrode;
b) inserting the electrode plate group in a cell container;
c) preparing a liquid mixture comprising at least one solvent, a monomer comprising at least two acrylate groups, lithium hexafluorophosphate (LiPF₆), at least one of lithium bis(fluorosulfonyl)imide (LiFSI) and lithium bis(trifluoromethanesulfonyl)imide (LiTFSI), lithium difluoro(oxalato)borate (LiDFOB) and a thermal initiator of radical polymerization;
d) impregnating the electrode plate group with the liquid mixture;
e) partially charging the electrode plate group;
f) raising the temperature of the electrode plate group to a temperature high enough to cause cross-linking of the monomer for a duration ranging from 2 to 24 hours.

It was found that in-situ cross-linking of the monomer, i.e., performed when the liquid mixture containing the monomer permeates the group of electrode plates, promotes good contact of the electrodes with the cross-linked polymer and is preferable to ex-situ cross-linking. It was also found that partial charging of the element prior to crosslinking also promotes good contact of the electrodes with the cross-linked polymer.

In one embodiment, in step c), a mass percentage of the monomer ranges from 2 to 30 % when a total mass of the at least one solvent, lithium hexafluorophosphate (LiPF₆), the at least one of lithium bis(fluorosulfonyl)imide (LiFSI) and lithium bis(trifluoromethanesulfonyl)imide (LiTFSI), lithium difluoro(oxalato)borate (LiDFOB) and the thermal initiator of radical polymerization is considered 100 wt.%.

In one embodiment, in step c), a mass percentage of the monomer ranges from 7 to 10 % when a total mass of the at least one solvent, lithium hexafluorophosphate (LiPF₆), the at least one of lithium bis(fluorosulfonyl)imide (LiFSI) and lithium bis(trifluoromethanesulfonyl)imide (LiTFSI), lithium difluoro(oxalato)borate (LiDFOB) and the thermal initiator of radical polymerization is considered 100 wt.%.

In one embodiment, in step c), a mass percentage of the thermal initiator of radical polymerization is 0.1 to 3 weight percent with respect to a monomer mass.

In one embodiment, step e) consists of partially charging the electrode plate group to a state of charge ranging from 25 to 55 %.

In one embodiment, step f) is performed at temperature ranging from 50 to 100°C.

In one embodiment, the process further comprises a step e') between steps e) and f), step e') consisting of letting gas formed during partial charging of the electrode plate group escape from the cell container.

In one embodiment, the process further comprises a step g) of resuming charging of the electrode plate group until the electrode plate group reaches a state of charge of at least 90%.

In one embodiment, the step further comprises a step h) of discharging the electrode plate group to a state of charge of less than 5 %.

In one embodiment, the process further comprises a step i) of charging the electrode plate group to a state of charge ranging from 20 to 40 %.

In one embodiment, the process further comprises a step j) of letting gas escape from the cell container.

In one embodiment, any step subsequent to step f) is carried out at the same temperature as in step f).

### BRIEF DESCRIPTION OF THE DRAWINGS

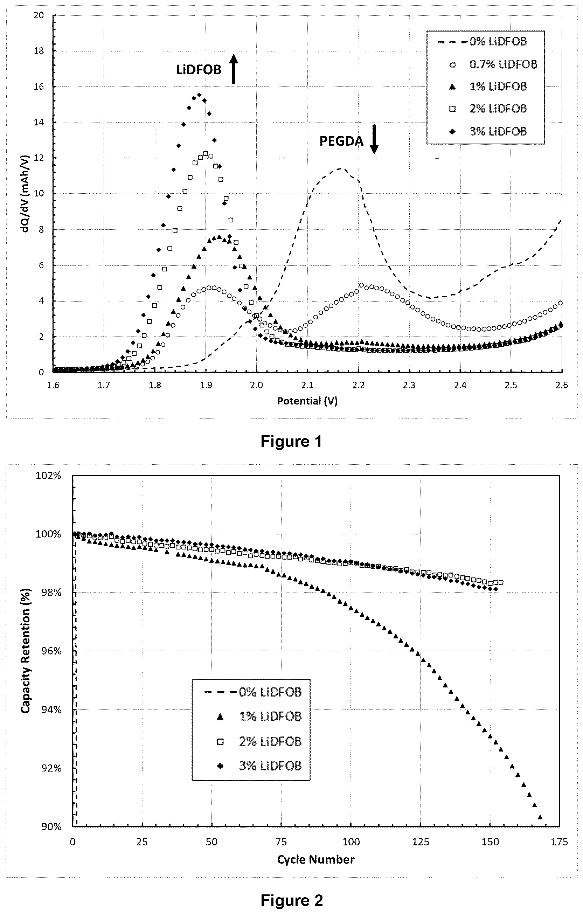

FIG. 1 is a dQ/dV plot comparing PEGDA reduction peaks on first charge with varying concentrations of LiDFOB in electrolyte solution. Charge was performed at a rate of C/20 and at 25°C.
FIG. 2 represents the capacity retention of the different tested cells as a function of the number of cycles performed. The tested cells contained varying concentrations of LiDFOB. The gel electrolyte was obtained through cross-linking of a PEGDA monomer. Cycling was performed at 25°C between 2.7 and 4.2 V. Each cell was charged at a C/3 rate until the voltage of 4.2 volts was reached. The voltage was maintained at 4.2 volts and the charge was stopped when the current fell below C/10. Discharge was carried out at current of D/3.

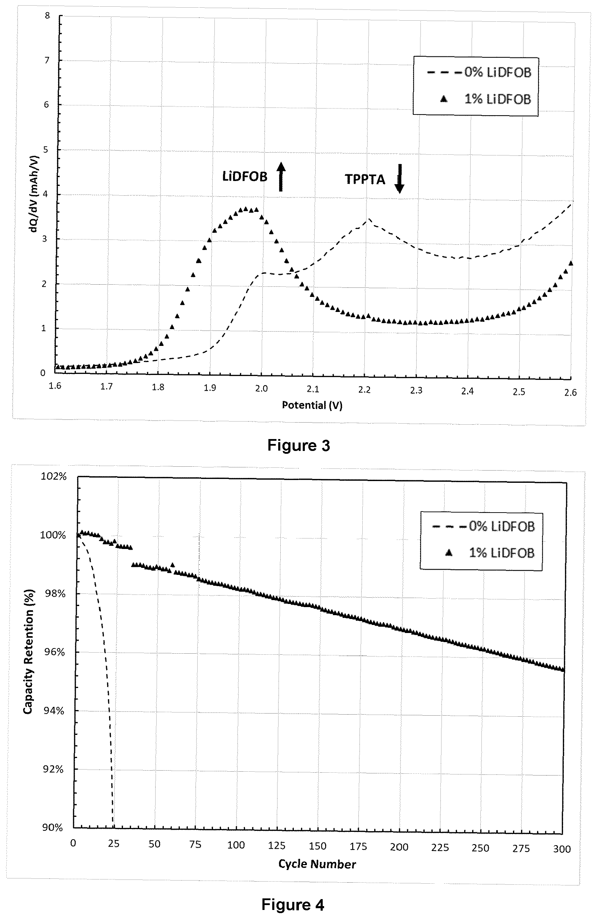

FIG. 3 is a dQ/dV plot comparing TPPTA reduction peaks on first charge with varying concentrations of LiDFOB in electrolyte solution. Charge was performed at a rate of C/20 and at 25°C.
FIG. 4 represents the capacity retention of the different tested cells as a function of the number of cycles performed. The tested cells contained varying concentrations of LiDFOB. The gel electrolyte was obtained through cross-linking of a TPPTA monomer. Cycling was performed at 25°C between 2.7 and 4.2V. Each cell was charged at a C/3 rate until the voltage of 4.2 volts was reached. The voltage was maintained at 4.2 volts and the charge was stopped when the current fell below C/10. Discharge was carried out at current of D/3.

### DETAILED DESCRIPTION OF EMBODIMENTS

### Description of the gel polymer electrolyte:

The polymer used as the matrix for the gel electrolyte is derived from the cross-linking of a monomer which is a compound having at least two acrylate groups. The compound typically has two, three or four acrylate groups. In the following, the term "acrylate" includes methacrylate derivatives. Di(meth)acrylates, tri(meth)acrylates and tetra(meth)acrylates are also within the scope of the invention. The polymer used as the matrix comprises at least one acrylate group.

Examples of compounds having two acrylate groups are poly(ethylene glycol) diacrylate (PEGDA), poly(ethylene glycol) dimethacrylate (PEGDMA), polypropylene glycol) diacrylate (PPGDA) and polypropylene glycol) dimethacrylate (PPGDMA). One may cite di(propylene glycol) diacrylate, 1H,1H,6H,6H-perfluoro-1,6-hexyl diacrylate, 1H,1H,5H,5H-perfluoropentane-1,5-diyl diacrylate and 2,2,3,3-tetrafluoro-1,4-butyl diacrylate.

Examples of compounds having three acrylate groups are trimethylolpropane triacrylate (TMPTA); pentaerythritol triacrylate; trimethylolpropane ethoxylate triacrylate and trimethylolpropane propoxylate triacrylate (TPPTA).

An example of a compound having four acrylate groups is pentaerythritol tetracrylate (PETEA).

Among the above cited monomers, the two preferred ones are poly(ethylene glycol) diacrylate (PEGDA) and trimethylolpropane propoxylate triacrylate (TPPTA). A preferred molecular mass by weight for poly(ethylene glycol) diacrylate (PEGDA) ranges from 500 to 1000 g/mole, preferably from 600 to 800 g/mole. It has been observed that low molecular weight monomers enhance impregnation of the pores of the electrodes by the electrolyte.

Cross-linking occurs when the monomer is brought into the presence of a radical polymerization initiator and this initiator is activated by heat or UV radiation. The degree of cross-linking progress can be estimated by measuring the percentage of monomers remaining in the reaction medium at different times during the reaction. The residual monomers are characterized by the presence of a C=C double bond in the vinyl group which can be detected through Fourier transform infrared spectroscopy. This technique can be used by the skilled person to measure the amount of the residual monomers. The cross-linking conditions are chosen to minimize the amount of residual monomers. As explained above, a small amount of residual monomers remain which reduce at the negative electrode and have a detrimental effect on the operation of the cell.

The use of the mixture of salts according to the invention prevents the reduction of the acrylate monomers during the initial charge/discharge cell cycle ("electrochemical formation") allowing for in-situ polymerization of the acrylate monomers to form a gel polymer electrolyte cell with high material utilization, good cyclability, and low cell resistance. The mixture of salts consists of lithium hexafluorophosphate (LiPF₆), lithium difluoro(oxalato)borate (LiDFOB) and at least one of lithium bis(fluorosulfonyl)imide (LiFSI) and lithium bis(trifluoromethanesulfonyl)imide (LiTFSI). Lithium bis(fluorosulfonyl)imide (LiFSI) is preferred over lithium bis(trifluoromethanesulfonyl)imide (LiTFSI) since it exhibits a higher ionic conductivity. The term "consists of" means that the sum of the masses of lithium hexafluorophosphate (LiPF₆), lithium difluoro(oxalato)borate (LiDFOB) and the at least one of lithium bis(fluorosulfonyl)imide (LiFSI) and lithium bis(trifluoromethanesulfonyl)imide (LiTFSI) accounts for at least 95 %, preferably at least 99 % of the total mass of the lithium salts.

LiPF₆ provides current collector passivation and ionic conductivity. LiFSI and/or LiTFSI improves ionic conductivity and high temperature stability. LiDFOB is used for its solid electrolyte interface (SEI) film-forming properties due to the reduction of the DFOB⁻ anion around 1.6 V vs Li⁺/Li. Without LiDFOB, the electrolyte solution containing only LiPF₆ and LiFSI or LiTFSI would have a poor cycle life due to the reduction of the acrylate groups at 1.6-1.3 V vs. Li⁺/Li causing a poor SEI formation on the first cycle. The mass percentage of LiDFOB can be controlled in the electrolyte solution to completely prevent the reduction of the acrylate monomers depending on the selected monomer. The mass percentage of LiDFOB can range from 0.1 to 5 %, preferably from 1 to 4 %, even more preferably from 2 to 3% when a total mass of the at least one solvent, lithium hexafluorophosphate (LiPF₆), the at least one of lithium bis(fluorosulfonyl)imide (LiFSI) and lithium bis(trifluoromethanesulfonyl)imide (LiTFSI) and lithium difluoro(oxalato)borate (LiDFOB) is considered 100 wt.%.

The monomer containing at least two acrylate groups and the salts are contained in at least one organic solvent. The organic solvent may be selected from the group consisting of saturated cyclic carbonates, unsaturated cyclic carbonates, linear carbonates, linear esters, linear ethers, cyclic ethers and fluorinated derivates thereof. Preferred saturated cyclic carbonates include propylene carbonate (PC), ethylene carbonate (EC), butylene carbonate (BC) and mixtures thereof. An example of a fluorinated cyclic carbonate is monofluoroethylene carbonate (FEC). Vinylene carbonate (VC) may be used as a cyclic unsaturated carbonate. Preferred linear carbonates include dimethyl carbonate (DMC), ethyl methyl carbonate (EMC), diethyl carbonate (DEC), dipropyl carbonate (DPC) and mixtures thereof. Preferred linear esters include methyl acetate (MA), ethyl acetate (EA), methyl propionate (MP), ethyl propionate (EP), butyl propionate (BP), methyl butyrate (MB), ethyl butyrate (EB), propyl butyrate (PB) and mixtures thereof. Preferred linear ethers include dimethyl ether (DME), diethyl ether (DEE) and mixtures thereof. Preferred cyclic ethers include lactones such as gamma-butyrolactone.

In one preferred embodiment, the at least one solvent is selected from the group consisting of linear carbonates, linear esters and mixtures thereof. The at least one solvent may be selected from the group consisting of dimethyl carbonate (DMC), ethyl methyl carbonate (EMC), methyl propionate (MP) and mixtures thereof. In a preferred embodiment, the at least one solvent is a mixture of dimethyl carbonate (DMC), ethyl methyl carbonate (EMC) and methyl propionate (MP).

The gel polymer electrolyte also contains one or several thermal initiators of radical polymerization which may be selected from the group consisting of compounds comprising one or several azo groups and peroxides. Preferred thermal initiators are those which are activated by a temperature ranging from 50 to 100°C, or from 60 to 90°C or from 70 to 80°C. Moderate temperatures ranging from 50 to 60°C are preferred. A preferred radical initiator comprising an azo group is azobisisobutyronitrile (AIBN). A preferred peroxide is benzoyl peroxide.

### Description of the positive and negative electrodes

The negative electrode comprises an active material selected from the group consisting of carbon, silicon and a carbon-silicon composite. Carbon can be selected from the group consisting of graphite, coke, carbon black and vitreous carbon. Graphite is preferred.

The active material of the positive electrode is not particularly limited. Preferred active materials are selected from the group consisting of a lithium iron phosphate, a lithium manganese iron phosphate and at least one lithium oxide of at least one transition metal.

The lithium iron phosphate is a compound having the formula LiₓFe_{1-y}M_{y}PO₄ (LFP) wherein M is selected from the group consisting of B, Mg, Al, Si, Ca, Ti, V, Cr, Mn, Co, Ni, Cu, Zn, Y, Zr, Nb, Mo and mixtures thereof;
0.8 ≤ x ≤ 1.2; 0,5 ≤ 1-y; 0 ≤ y. A preferred lithium iron phosphate is LiFePO₄.

The lithium manganese iron phosphate is a compound of formula

LiₓMn_{1-y-z}Fe_{y}M_{z}PO₄ (LMFP)

wherein M is selected from the group consisting of B, Mg, Al, Si, Ca, Ti, V, Cr, Co, Ni, Cu, Zn, Y, Zr, Nb, Mo and mixtures thereof;
0.8 ≤ x ≤ 1.2; 0.5 ≤1-y-z; 0 < y; 0 ≤ z and M is one or more of B, Mg, Al, Si, Ca, Ti, V, Cr, Co, Ni, Cu, Zn, Y, Zr, Nb, Mo and mixtures thereof.
Preferably, 0.7 ≤ 1-y-z ≤ 0.9 or 0.75 ≤ 1-y-z ≤ 0.90.
Preferably, 0.15 ≤ y ≤ 0.25.
Typical examples are LiMn_{0.8}Fe_{0.2}PO₄, LiMn_{0.7}Fe_{0.3}PO₄, LiMn_{2/3}Fe_{1/3}PO₄ and LiMn_{0.5}Fe_{0.5}PO₄.

The lithium iron phosphate and/or the lithium manganese iron phosphate may be the sole positive active material. Alternatively, they can also be used in association with at least one lithium oxide of at least one transition metal of formula LiₓM_{1-y-z-w}M'_{y}M"_{z}M‴_{w}O₂ (LMO₂) where M, M', M" et M‴ are selected from the group consisting of B, Mg, Al, Si, Ca, Ti, V, Cr, Mn, Fe, Co, Ni, Cu, Zn, Y, Zr, Nb, W and Mo with the proviso that at least one of M, M', M" and M‴ be selected from the group consisting of Mn, Co, Ni, and Fe; M, M', M" being M‴ being different from each others; and
0.8 ≤ x ≤ 1.4; 0 ≤ y ≤ 0.5; 0 ≤ z ≤ 0.5; 0 ≤ w ≤ 0.2 and x+y+z+w < 2.1.

The lithium oxide of at least one transition metal can be a lithium nickel cobalt manganese oxide (NMC) and/or a lithium nickel cobalt aluminum oxide (NCA) compound of respective formulas:
Li_{w}(NiₓMn_{y}Co_{z}Mₜ)O₂ (NMC) where 0.9 ≤ w ≤ 1.1; 0 < x; 0 < y; 0 < z; 0 ≤ t; M being selected from the group consisting of Al, B, Mg, Si, Ca, Ti, V, Cr, Fe, Cu, Zn, Y, Zr, Nb, W, Mo, Sr, Ce, Ta, Ga, Nd, Pr, La and mixtures thereof,
Li_{w}(NiₓCo_{y}Al_{z}Mₜ)O₂ (NCA) where 0.9 ≤ w ≤ 1.1; 0 < x; 0 < y; 0 < z; 0 ≤ t; M being selected from the group consisting of B, Mg, Si, Ca, Ti, V, Cr, Mn, Fe, Cu, Zn, Y, Zr, Nb, W, Mo, Sr, Ce, Ga, Ta, Nd, Pr, La and mixtures thereof.

In one embodiment, the lithium oxide of at least one transition metal is a lithium nickel cobalt manganese oxide (NMC) wherein 0.6 ≤ x.

In one embodiment, the lithium oxide of at least one transition metal is a lithium nickel cobalt manganese oxide (NMC) wherein 0.6 ≤ x and 0.15 ≤ y < 0.40 or 0.20 ≤ y ≤ 0.30.

In one embodiment, the lithium oxide of at least one transition metal is a lithium nickel cobalt manganese oxide (NMC) wherein 0.6 ≤ x and 0.10 ≤ z < 0.30 or 0.15 ≤ z ≤ 0.25.

When a lithium manganese iron phosphate is blended with a lithium oxide of at least one transition metal, such as NMC, the lithium iron phosphate may represent from 50 to 99 % or from 55 to 75 % by mass of the mass of the blend. In another embodiment, the lithium iron phosphate may represent from 1 to 50 % by mass of the mass of the blend.

A separator is placed between a positive electrode and a negative electrode. The separator can consist of a layer of a material selected from the group consisting of polypropylene (PP), polyethylene (PE), polytetrafluoroethylene (PTFE), polyacrylonitrile (PAN), polyester such as polyethylene terephthalate (PET), polybutylene terephthalate (PBT), cellulose, polyimide, glass fibers. The separator can consist of several layers of the aforementioned materials, the layers being of the same kind or of different kinds. A layer can be coated on one or on both sides with a ceramic layer, such as alumina, or with polyvinylidene difluoride (PVdF) or with polyvinylidene fluoride-hexafluoropropylene (PVdF-HFP) or with acrylates.

A preferred separator consists of a layer of polyethylene coated on both sides by a layer of alumina.

### Description of the method for preparing the gel polymer electrolyte in situ:

The cross-linking of the monomers is carried out in situ. This means that cross-linking of the monomers occurs while the reaction mixture impregnates the electrode plate group. Other polymerization methods do not lead to as good an impregnation of the electrodes as in the present invention. Two of these other polymerization methods include cross-linking the acrylate monomers prior to the first charge/discharge cycle and SEI formation or forming a gel polymer electrolyte ex-situ prior to assembly of the cell. The first method traps the gases formed during the electrochemical formation inside the polymer network causing low material utilization and poor cycle life. The second method causes interfacial issues between the electrodes and the gel polymer electrolyte since a discontinuous network is formed which results in high cell resistance.

An electrode plate group is prepared in a conventional manner. It is prepared by superimposing at least one positive electrode, at least one separator, at least one negative electrode, each positive electrode being separated from the negative electrode by a separator. This can be a planar or spiral arrangement of the electrodes.

The electrode plate group is introduced in a cell container. The cell container can be a parallelepipedic or a cylindric container. It can also be a flexible pouch made up after welding the edges of two multi-layer films, each multi-layer film comprising a metal layer, sandwiched between two layers of plastic material.

Appropriate amounts of the monomer, the at least one solvent, the salts and the thermal initiator are mixed to give an electrolyte solution. Generally, the mass percentage of the monomer ranges from 2 to 30 % or from 5 to 15 % or from 7 to 10 % when a total mass of the at least one solvent, lithium hexafluorophosphate (LiPF₆), the at least one of lithium bis(fluorosulfonyl)imide (LiFSI) and lithium bis(trifluoromethanesulfonyl)imide (LiTFSI), lithium difluoro(oxalato)borate (LiDFOB) and the thermal initiator of radical polymerization is considered 100 wt.%. A low percentage of monomer allows obtaining a lower viscosity of the electrolyte solution which improves impregnation of the electrodes.

The total amount of the thermal initiator(s) of radical polymerization may represent from 0.1 to 3 weight percent, ideally from 1 to 1.5 weight percent with respect to the monomer mass.

The electrode plate group is soaked in the required amount of electrolyte solution at room temperature. A rest period generally ranging from 1-4 hours is preferably observed to improve the penetration of the electrolyte solution into the pores of both the positive and negative electrodes.

Preferably, a current of a small voltage, typically from 1.5 to 2.7 V, is then applied to the electrode plate group during generally no more than 10 minutes in order to prevent a possible dissolution of the current collector of the negative electrode.

The electrode plate group is then preferably left at rest for several days at room temperature, typically up to 168 hours.

A partial charge of the electrode plate group is performed. It leads to a passivation layer (SEI) at the surface of the negative electrode which is accompanied by the formation of gases. The charge is stopped after a state of charge ranging from 25 to 55%, typically 30% is reached. Since cross-linking of the monomers has not yet started, the electrolyte solution is still liquid. This liquid form facilitates removal of the gases formed.

The temperature is raised so as to provoke cross-linking of the monomers. The temperature is generally set in the range of from 50 to 100°C, preferably from 60 to 70°C. It can be set in the range of from 60°C to 70°C when the radical initiator is azobisisobutyronitrile (AIBN). Heat is maintained during 2-24 hours, generally from 10 to 15 hours depending on the amount of the monomer and the radical initiator. The use of the FT-IR technique allows to check whether the reaction mixture still contains compounds having a double C=C bond. The skilled person will be able to know when to stop application of heat.

When the amount of unreacted monomers becomes neglectable, charge of the electrode plate group is resumed until a state of charge around 100 % is reached.

The electrode plate group is then preferably left at rest for 10-30 min., generally 15 min.

The electrode plate group is then generally discharged to about 0% of state of charge and charged to a state of charge of about 30%.

The second stage of charge generates gases. These gases are removed from the cell container. Vacuum can be applied inside the cell container to facilitate removal of the gases.

The cell is then hermetically sealed preferably under vacuum.

As it can be noted from the above description of the method steps, cross-linking of the monomers starts after the cell has been partially charged. Performing cross-linking of the monomers for a cell state of charge ranging from 25 to 55 % allows preventing any trapped gases during cell operation. If cross-linking was to be completed before charging the cell, the charging step would be carried out on an electrolyte in an almost solid state. This almost solid state would prevent the gases from escaping the cell container. This would have an adverse effect on the operation of the cell. On the contrary, if cross-linking would start after the cell has reached an almost fully state of charge, the cell would be exposed to an elevated temperature at a high potential for a relatively long period of time lasting up to 24 hours which would also degrade the performances of the cell.

### EXAMPLES

In each of the following examples, graphite was used as the negative active material and a blend of LiMn_{0.8}Fe_{0.2}PO₄ with LiNi_{0.6}Mn_{0.2}Co_{0.2}O₂ was used as the positive active material. The gel polymer electrolyte was obtained through in-situ cross-linking of a monomer dissolved in a solvent mixture of PC/EC/DMC/EMC/MP in a volume ratio of 1.65/0.35/3/3/4 containing 0.3M LiFSI and 1.0M LiPF₆. The amount of LiDFOB was added to this baseline electrolyte from 0 to 3 wt%. The amount of the monomer, either PEGDA or TPPTA, in the electrolyte solution was set to 7.5 wt.% with respect to the electrolyte solution.

Cross-linking was triggered by exposing the electrode plate group impregnated with the solution to a temperature of 60°C for 24 hours. The cell had been beforehand partially charged to a state of charge of 30%. Upon completion of the cross-linking, charge of the cell was resumed. The cells were degassed to remove the gases generated from both the passivation layer formation and from the cross-linking reaction thereby preventing any trapped gases during cell operation.

### 1) Results obtained with a poly(ethylene glycol) diacrylate (PEGDA) monomer

Different cells were fabricated. They differed by the percentage of LiDFOB in the gel polymer electrolyte. The tested percentages were 0%, 0.7%, 1%, 2% and 3% weight percent LiDFOB and 100%, 99.3%, 99%, 98%, 97% weight percent of PC/EC/DMC/EMC/MP in a volume ratio of 1.65/0.35/3/3/4 containing 0.3M LiFSI and 1.0M LiPF₆

The cells were charged. The difference V between the potential of the positive electrode and the potential of the negative electrode was progressively increased from 1.6 V to 2.6 V. The amount of electricity Q generated by the reduction of the species in the electrolyte was monitored. The derivative dQ/dV vas plotted as a function of the difference V in FIG. 1. This figure shows two peaks: a first one at a potential of about 1.9 V and a second one at a potential of about 2.15 V. The first peak is attributed to the reduction of LiDFOB. The second one is attributed to the reduction of the PEGDA unreacted monomers. One can note that the height of the reduction peak of LiDFOB increases as the LiDFOB concentration increases. The height of the reduction peak of PEGDA decreases as the LiDFOB concentration increases. This indicates that increasing the amount of LiDFOB causes the amount of unreacted PEGDA monomers to decrease. Without being bound to a theory, the Applicant suggests that the DFOB⁻ anions reduce at the negative electrode in place of the PEGDA unreacted monomers. The range of concentrations ranging from 1 to 3 % appears to be most effective for preventing the reduction of the unreacted PEGDA monomers.

The presence of LiDFOB provides a benefit in terms of discharged capacity. The discharged capacity of the cell devoid of LiDFOB is about 146 mAh/g at a discharge current of C/10 at 60°C between the 4.2 and 2.7 V. The discharged capacity of the cells containing LiDFOB in the above indicated percentages ranges from 153 to 156 mAh/g. Increasing the percentage of LiDFOB above 3% does not provide a significant increase of the discharged capacity.

The different cells were cycled and the discharged capacity was measured at each cycle. The capacity retention which is the ratio between the discharged capacity at a given cycle number and the initial discharged capacity was calculated and plotted as a function of the cycle number. FIG. 2 shows the variation of the capacity retention as a function of the cycle number. It is worth noting that the cell the electrolyte of which is devoid of LiDFOB exhibits a poor cycling ability since its capacity retention falls by 10% after 2 cycles. The cell the electrolyte of which contains 1 % of LiDFOB shows a slower loss of capacity. Indeed, its capacity loss is about 10 % but after 170 cycles. The cells the electrolyte of which contains 2 or 3 % of LiDFOB exhibit a good cycling ability. Their capacity loss is only about 2 % after 150 cycles.

### 2) Results obtained with a trimethylolpropane propoxylate triacrylate (TPPTA) monomer

Two cells were fabricated: A first one the electrolyte of which did not contain LiDFOB and a second one the electrolyte of which contained 1% LiDFOB.

The difference V between the potential of the positive electrode and the potential of the negative electrode was increased progressively from 1.6 V to 2.6 V. The amount of electricity Q generated by the reduction of the species in the electrolyte was monitored. The derivative dQ/dV was plotted as a function of the difference V on FIG. 3. A reduction peak of unreacted TPPTA monomers is visible at 2.2 V for the cell the electrolyte of which is devoid of LiDFOB. This peak is no longer visible for the cell the electrolyte of which contains 1 % of LiDFOB. This indicates that LiDFOB causes the amount of unreacted TPPTA monomers to decrease.

The presence of LiDFOB provides a benefit in terms of discharged capacity. The discharged capacity of the cell devoid of LiDFOB is about 149 mAh/g at a discharge current of C/10 at 60°C between 4.2 and 2.7 V. The discharged capacity of the cell containing 1% of LiDFOB is about 154 mAh/g.

Both cells were cycled and the discharged capacity was measured at each cycle. FIG. 4 shows the variation of the capacity retention as a function of the cycle number. It is worth noting that the cell the electrolyte of which is devoid of LiDFOB exhibits a poor cycling ability since its capacity retention falls by 10% after 25 cycles. The cell the electrolyte of which contains 1 % of LiDFOB shows a slower loss of capacity. Indeed, its capacity loss is about 4 % but after 275 cycles.

The above examples show the benefits of incorporating LiDFOB in a gel polymer electrolyte.

## Claims

1. A lithium-ion electrochemical cell comprising:
- a negative electrode comprising an active material selected from the group consisting of carbon, silicon and a carbon-silicon composite;
- a positive electrode;
- a gel-type electrolyte comprising a matrix which is a polymer resulting from the cross-linking of a monomer comprising at least two acrylate groups in which matrix there is embedded a liquid mixture comprising at least one solvent, lithium hexafluorophosphate (LiPF₆), at least one of lithium bis(fluorosulfonyl)imide (LiFSI) and lithium bis(trifluoromethanesulfonyl)imide (LiTFSI), lithium difluoro(oxalato)borate (LiDFOB) and a thermal initiator of radical polymerization.

2. The lithium-ion electrochemical cell according to claim 1, wherein the monomer is selected from the group consisting of poly(ethylene glycol)diacrylate (PEGDA), poly(ethylene glycol) dimethacrylate (PEGDMA), polypropylene glycol) diacrylate (PPGDA), polypropylene glycol) dimethacrylate (PPPGDMA), trimethylolpropane propoxylate triacrylate (TPPTA) and mixtures thereof.

3. The lithium-ion electrochemical cell according to claim 2, wherein the monomer is selected from the group consisting of poly(ethylene glycol)diacrylate (PEGDA), trimethylolpropane propoxylate triacrylate (TPPTA) and mixtures thereof.

4. The lithium-ion electrochemical cell according to claim 1, wherein the mass percentage of LiDFOB ranges from 0.1 to 5 % when a total mass of the at least one solvent, lithium hexafluorophosphate (LiPF₆), the at least one of lithium bis(fluorosulfonyl)imide (LiFSI) and lithium bis(trifluoromethanesulfonyl)imide (LiTFSI), lithium difluoro(oxalato)borate (LiDFOB) is considered 100 wt.%.

5. The lithium-ion electrochemical cell according to claim 1, wherein the at least one solvent is selected from the group consisting of cyclic carbonates, linear carbonates, linear esters, linear ethers, the fluorinated derivatives of each of the carbonates, esters or ethers and a mixture thereof.

6. The lithium-ion electrochemical cell according to claim 1, wherein the positive electrode comprises an active material which is at least one of a lithium iron phosphate, a lithium manganese iron phosphate and a lithium oxide of at least one transition metal.

7. The lithium-ion electrochemical cell according to claim 6, wherein the at least one lithium oxide of at least one transition metal is selected from the group consisting of a lithium cobalt oxide, a lithium manganese oxide, a lithium nickel oxide, a lithium nickel cobalt manganese oxide (NMC), a lithium nickel cobalt aluminum oxide (NCA) and a mixture thereof.

8. A process for in-situ thermal polymerization of a gel-type polymer electrolyte in a lithium-ion electrochemical cell, said process comprising the steps of:
- a) preparing an electrode plate group, said electrode plate group comprising at least one positive electrode, at least one separator and at least one negative electrode,
- b) inserting the electrode plate group in a cell container,
- c) preparing a liquid mixture comprising at least one solvent, a monomer comprising at least two acrylate groups, lithium hexafluorophosphate (LiPF₆), at least one of lithium bis(fluorosulfonyl)imide (LiFSI) and lithium bis(trifluoromethanesulfonyl)imide (LiTFSI), lithium difluoro(oxalato)borate (LiDFOB) and a thermal initiator of radical polymerization,
- d) impregnating the electrode plate group with the liquid mixture,
- e) partially charging the electrode plate group,
- f) raising the temperature of the electrode plate group to a temperature high enough to cause cross-linking of the monomer for a duration ranging from 2 to 24 hours.

9. The process of claim 8, wherein in step c), a mass percentage of the monomer ranges from 2 to 30 % when a total mass of the at least one solvent, lithium hexafluorophosphate (LiPF₆), the at least one of lithium bis(fluorosulfonyl)imide (LiFSI) and lithium bis(trifluoromethanesulfonyl)imide (LiTFSI), lithium difluoro(oxalato)borate (LiDFOB) and the thermal initiator of radical polymerization is considered 100 wt.%.

10. The process of claim 9, wherein in step c), a mass percentage of the monomer ranges from 7 to 10 % when a total mass of the at least one solvent, lithium hexafluorophosphate (LiPF₆), the at least one of lithium bis(fluorosulfonyl)imide (LiFSI) and lithium bis(trifluoromethanesulfonyl)imide (LiTFSI), lithium difluoro(oxalato)borate (LiDFOB) and the thermal initiator of radical polymerization is considered 100 wt.%.

11. The process of claim 8, wherein step e) consists of partially charging the electrode plate group to a state of charge ranging from 25 to 55 %.

12. The process of claim 8, further comprising a step e') between steps e) and f), step e') consisting of letting gas formed during partial charging of the electrode plate group escape from the cell container.

13. The process of claim 8, further comprising a step g) of resuming charging of the electrode plate group until the electrode plate group reaches a state of charge of at least 90%.

14. The process of claim 13, further comprising a step h) of discharging the electrode plate group to a state of charge of less than 5 %.

15. The process of claim 14, further comprising a step i) of charging the electrode plate group to a state of charge ranging from 20 to 40 %.
